# NEUE EUROPÄISCHE PATENTSCHRIFT

(11) **EP 3 504 441 B2**
(45) Veröffentlichungstag und Bekanntmachung des Hinweises auf die Entscheidung über den Einspruch: **16.09.2026**
(45) Hinweis auf die Patenterteilung: 16.06.2021
(21) Anmeldenummer: 18753164.5
(22) Anmeldetag: 09.08.2018
(51) Int. Cl.: F04D 25/08, F04D 27/00, F04D 29/42, G01F 1/36

(54) **VENTILATOR MIT INTEGRIERTER VOLUMENSTROMREGELUNG**
FAN COMPRISING INTEGRATED FLOW CONTROL
VENTILATEUR À RÉGULATION INTÉGRÉE DU DÉBIT VOLUMIQUE

(30) Priorität: 07.09.2017 DE 102017120652
(43) Veröffentlichungstag der Anmeldung: 03.07.2019
(73) Patentinhaber: EBM-Papst Mulfingen GmbH&CO. KG, 74673 Mulfingen (DE)
(72) Erfinder: GEBERT, Daniel, 74613 Öhringen (DE)
(74) Vertreter: Staeger & Sperling Partnerschaftsgesellschaft mbB
(86) Internationale Anmeldenummer: PCT/EP2018/071634
(87) Internationale Veröffentlichungsnummer: WO 2019/048176

(56) Entgegenhaltungen:
- WO-A1-2017/054814
- US-A1- 2010 143 125
- US-B1- 6 186 744

## Beschreibung

Die Erfindung betrifft einen Ventilator mit integrierter Volumenstromregelung.

Aus dem Stand der Technik sind bereits verschiedene Ausführungsformen von Ventilatoren bekannt, welche den Volumenstrom des Ventilators durch eine Anpassung der Ventilatorraddrehzahl anhand von gemessenen Luftdrücken regeln. Die Ventilatoren umfassen hierzu jeweils ein von einem Motor angetriebenes Ventilatorrad, dessen Drehzahl über die Motordrehzahl gesteuert wird.

Bei den aus dem Stand der Technik bekannten Ventilatoren werden zur Volumenstromregelung Vergleichswerte der Luftdrücke in einem Ansaugbereich des Ventilatorrads und außerhalb des Ventilators, d.h. der Umgebungsdruck, mittels flexibler Schläuche gemessen, die von der jeweiligen Messstelle zu einem Luftdrucksensor führen. Der oder die Luftdrucksensor(en) und die Regelelektronik befinden sich meist an der Motorelektronik bzw. Motorsteuerung, die in axialer Strömungsrichtung gesehen hinter dem Ventilatorrad angeordnet ist, so dass die Druckschläuche an dem Ventilatorrad vorbei in den Ansaugbereich geführt werden müssen. Die von den Luftdrucksensoren ermittelten Luftdruckwerte des von dem Ventilatorrad im Bereich der Einströmdüse erzeugten statischen Unterdrucks und des Umgebungsdrucks werden im Stand der Technik an eine mit der Motorsteuerung verbundene Regeleinheit übermittelt, die aus den gemessenen Luftdruckwerten einen Regelwert zur Drehzahlregelung des Ventilatorrades bestimmt.

Durch die Verwendung der flexiblen Schläuche kann es jedoch dazu kommen, dass beispielsweise durch Knicke, Löcher oder Engstellen in den Schläuchen fehlerhafte Luftdruckwerte ermittelt werden. Ferner ist die Montage sehr aufwendig und teuer, da sowohl die Luftdrucksensoren und die Regeleinheit als auch die flexiblen Schläuche einzeln montiert werden müssen. Zudem muss der Ventilator hierfür über spezielle Halterungen für die Schläuche vorsehen, um diese verlegen zu können. Eine Montage ist meist nur von Hand und daher zeitaufwendig und mithin kostenintensiv möglich. Druckschriftlicher Stand der Technik ist in den Dokumenten US 6,186,744 B1 und US 2010/143125 A1 offenbart.

Der Erfindung liegt deshalb die Aufgabe zugrunde, einen Ventilator mit integrierter Volumenstromregelung bereit zu stellen, bei dem die statischen Luftdrücke zur Regelung des Volumenstroms einfach und fehlerfrei ermittelt werden können und bei dem die Elemente zur Messung der Luftdrücke einfach und kostengünstig montierbar sind.

Diese Aufgabe wird durch die Merkmalskombination gemäß Patentanspruch 1 gelöst.

Erfindungsgemäß wird hierfür ein insbesondere als Kompaktmodul ausgebildeter Ventilator vorgeschlagen, der einen Motor, ein von dem Motor angetriebenes Ventilatorrad, eine stromaufwärts zu dem Ventilatorrad angeordnete Einströmdüse, zumindest eine Luftdruckmessvorrichtung mit zumindest einem Luftdrucksensor und eine mit der Luftdruckmessvorrichtung verbundene Regelelektronik umfasst. Die zu fördernde Luft wird von dem durch den Motor angetriebenen Ventilatorrad aus einem Zuströmraum, der entlang des Strömungspfades der Luft vor bzw. stromaufwärts der Einströmdüse liegt und meist durch die freie Umgebung gebildet ist, in die Einströmdüse gesaugt. Die Luftdruckmessvorrichtung und die Regelelektronik sind für die Luftdruckmessung unmittelbar an der Einströmdüse oder mittelbar über ein Frontelement stromaufwärts an der Einströmdüse angeordnet, sodass der Abstand zu einem Düsendruckraum und dem Zuströmraum, in denen jeweils der Luftdruck ermittelt werden soll, möglichst gering ist. Die zumindest eine Luftdruckmessvorrichtung steht zudem in unmittelbarer Wirkverbindung mit dem Zuströmraum und dem von der Einströmdüse bestimmten Düsendruckraum, welcher durch den Innenraum der Einströmdüse beispielsweise in dem Bereich ihrer Engstelle mit verringertem Durchströmungsquerschnitt oder dem Bereich stromaufwärts ihrer Engstelle bestimmt ist.

Zur Messung der Luftdrücke ist die Luftdruckmessvorrichtung ausgebildet, unmittelbar einen statischen Umgebungsdruck der Luft bzw. Umgebungsluftdruck im Zuströmraum und einen statischen Druck der Luft bzw. Luftdruck im Düsendruckraum der Einströmdüse zu messen. Um die gemessenen und von der Regelelektronik verarbeiteten Werte an den Motor bzw. die Motorsteuerung leiten zu können, ist die Regelelektronik mit dem Motor verbunden und ausgebildet, basierend auf den unmittelbar gemessenen Werten des Umgebungsdrucks im Zuströmraum und des Drucks im Düsendruckraum einen Regelwert zu bestimmen und an den Motor zu liefern. Über den Regelwert ist die Ventilatorraddrehzahl und somit der Volumenstrom einstellbar. Die Verwendung von Schläuchen zur Druckerfassung und Übertragung an die Sensoren und Regelelektronik ist somit obsolet.

Die Einströmdüse ist in einer Ausführungsvariante von einer Einströmöffnung auf einer zu dem Zuströmraum gewandten Seite in Richtung des Ventilatorrades verjüngend als Konfusor ausgebildet, wodurch der statische Luftdruck im Inneren der Einströmdüse und insbesondere im Bereich des geringsten Durchströmungsquerschnitts gegenüber den Luftdrücken in dem Zuströmraum und den übrigen Bereichen im Konfusor minimal ist.

Erfindungsgemäß sind die Luftdruckmessvorrichtung und die Regelelektronik integral als ein Messmodul ausgebildet. Die Luftdruckmessvorrichtung und die Regelelektronik sind dabei eine modulare, integrale Baueinheit und mithin einfacher montierbar. Zudem muss keine zusätzliche Verbindung zwischen der Luftdruckmessvorrichtung und der Regelelektronik montiert werden.

Um sowohl den Druck in dem Düsendruckraum als auch den Umgebungsdruck in dem Zuströmraum unmittelbar erfassen zu können, ist das Messmodul unmittelbar an den Düsendruckraum der Einströmdüse und den Zuströmraum, d.h. dem freien ansaugseitigen Umgebungsraum mit Umgebungsdruck, angrenzend angeordnet.

Die Luftdrucksensoren sind zur unmittelbaren Messung des jeweiligen statischen Luftdrucks (Druck in der Einströmdüse bzw. Umgebungsdruck) in dem Messmodul direkt an ein Gehäuse des Messmoduls angrenzend und mit dem Düsendruckraum bzw. Zuströmraum über jeweils eine Öffnung in dem Gehäuse verbunden angeordnet. Alternativ weist das Messmodul in einer weiteren vorteilhaften Ausgestaltungsform zumindest einen Druckstutzen auf, der sich von dem Messmodul bzw. von einem Luftdrucksensor der Luftdruckmessvorrichtung in den Düsendruckraum und/oder den Zuströmraum erstreckt. Der Druckstutzen ist rohrförmig, vorzugsweise beidseitig offen sowie vorzugsweise starr ausgebildet und stellt die unmittelbare Wirkverbindung zwischen dem Luftdrucksensor und dem Düsendruckraum bzw. dem Zuströmraum her, sodass der Druck im Düsendruckraum und/oder der Umgebungsdruck im Zuströmraum unmittelbar auf den zumindest einen Luftdrucksensor der Luftdruckmessvorrichtung einwirkt.

Erfindungsgemäß umfasst die Luftdruckmessvorrichtung zwei Luftdrucksensoren, wobei ein erster Luftdrucksensor in unmittelbarer Wirkverbindung mit dem Düsendruckraum der Einströmdüse und ein zweiter Luftdrucksensor in unmittelbarer Wirkverbindung mit dem Zuströmraum stehen. Durch die zwei Luftdrucksensoren ist jeder der statischen Luftdruckwerte (Druck in der Einströmdüse und Druck im Zuströmraum, d.h. zumeist Umgebungsdruck) unabhängig voneinander erfassbar und an die Regelelektronik über eine jeweils unabhängige Verbindung übermittelbar. Eine alternative erfinderische Ausführung sieht vor, dass anstelle der zwei Luftdrucksensoren ein Differenzdrucksensor verwendet wird.

Um die gemessenen Luftdruckwerte und/oder einen daraus ermittelten Regelwert an den Motor übermitteln zu können, sieht eine vorteilhafte Ausgestaltungsform vor, dass die Regelelektronik und der Motor miteinander eine drahtgebundene oder eine drahtlose Verbindung aufweisen. Drähte lassen sich im Vergleich zu Druckschläuchen viel leichter, kostengünstiger und sicherer an dem Ventilator verlegen, um die Verbindung zwischen der die ansaugseitigen statischen Drücke messenden Luftdruckmessvorrichtung und der Motorsteuerung herzustellen. Bei einer alternativen Drahtlosverbindung wird eine Übermittlung der Signale bzw. Regelwerte der Regelelektronik an die Motorsteuerung per Funk vorgesehen.

Das Frontelement grenzt ferner an den Zuströmraum an und ist an einer stromaufwärtigen Seite der Einströmdüse angeordnet. In einer nicht erfindungsgemäßen Ausführung kann das Frontelement als Teil der Verkleidung des Ventilators ausgebildet sein und die Einströmöffnung der Einströmdüse bestimmen oder ein Teil der Einströmdüse sein. Das Frontelement ist ein Frontflansch oder Frontblech und als ein Befestigungselement zur Befestigung des Ventilators bestimmt. In einer Ausbildung als Kompaktmodul kann der Ventilator über das Frontelement bzw. Frontblech/Frontflansch an seinem Einsatzort, beispielsweise einem Klimakastengerät fixiert werden.

Alternativ kann das Frontelement in einer weiteren Ausgestaltungsalternative als Frontblech/Frontflansch ein eine Einströmöffnung der Einströmdüse überspannendes Gitter umfassen.

Erfindungsgemäß wird ferner ein Verfahren zur Volumenstromregelung eines vorstehend beschriebenen Ventilators vorgeschlagen. Das Verfahren umfasst hierzu, dass der statische Umgebungsdruck in dem Zuströmraum und der statische Druck in dem Düsendruckraum der Einströmdüse unmittelbar von der an der Einströmdüse oder dem Frontelement angeordneten Luftdruckmessvorrichtung gemessen werden. Ferner, dass die Regelelektronik aus dem statischen Umgebungsdruck des Zuströmraums und dem statischen Druck des Düsendruckraums im Inneren der Einströmdüse zumindest einen Regelwert bestimmt und den Regelwert drahtlos oder drahtgebunden an den Motor zur Steuerung der Ventilatorraddrehzahl übermittelt.

Eine Weiterbildung des Verfahrens sieht zudem vor, dass die Motorsteuerelektronik des Motors ausgebildet ist, ein Motorsteuerungssignal zur Volumenstromregelung des Ventilators aus mehreren Eingangswerten zu ermitteln, wobei einer der Eingangswerte der von der Regelelektronik bestimmte Regelwert ist.

In einer Ausgestaltung des Verfahrens ist zur Erhöhung der Messgenauigkeit zudem vorgesehen, dass der statische Druck in dem Düsendruckraum an zumindest zwei, vorzugsweise mehreren unterschiedlichen Messstellen erfasst und über eine Druckschlauchleitung an das Messmodul geführt wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

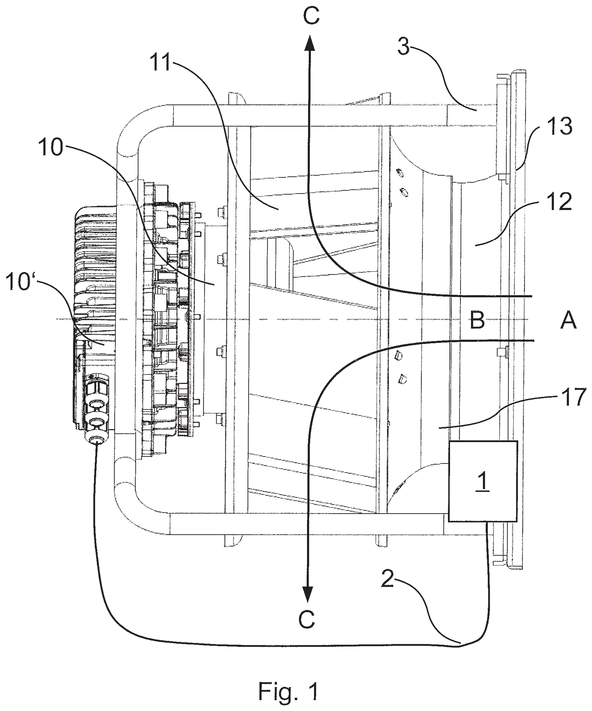

- Fig. 1: einen erfindungsgemäßen Ventilator in einer Seitenansicht

Die Figur ist beispielhaft schematisch.

In Figur 1 ist ein erfindungsgemäßer, in Radialbauweise ausgeführter Ventilator in einer Seitenansicht dargestellt und umfasst einen Motor 10 in Außenläuferbauweise, ein Ventilatorrad 11 und eine Einströmdüse 12. Über den Rahmen 3 sind die Bauteile miteinander zu einem Kompaktmodul verbunden. Der Motor 10 ist an einer hinteren, von dem Zuströmraum A abgewandten Seite des Ventilators an dem Rahmen 3 fixiert. Der Rotor des Motors 10 greift in die an der Bodenscheibe des Ventilatorrads 11 ausgebildete Nabe zum Antrieb des Ventilatorrads 11 ein. Das Ventilatorrad 11 saugt Luft axial aus dem Zuströmraum A entlang des durch die Pfeile skizzierten Strömungspfades in den Ventilator und bläst diese radial aus. Durch den sich zu dem Ventilatorrad 11 hin verjüngenden Strömungsquerschnitt der Einströmdüse 12 wird die aus dem Zuströmraum A angesaugte Luft entsprechend des beschleunigt, wobei sich gleichzeitig der statische Druck verringert. Somit ist der statische Druck in der Einströmdüse 12 geringer als in dem Zuströmraum A. Das Innere der Einströmdüse 12 bestimmt den Düsendruckraum B. Die Einströmdüse 12 erstreckt sich axial in den Bereich des Ventilatorrads 11 und in eine durch die Deckscheibe 17 des Ventilatorrads 11 bestimmte Ansaugöffnung.

Angrenzend zu dem Zuströmraum A und dem Düsendruckraum B ist das integrale Messmodul 1 angeordnet und an der Einströmdüse 12 fixiert. In dem integralen Messmodul 1 ist eine Lufdruckmessvorrichtung und eine Regelelektronik integriert. Die Luftdruckmessvorrichtung umfasst Luftdrucksensoren, die unmittelbar mit dem Zuströmraum sowie unmittelbar mit dem Düsendruckraum B in Verbindung stehen und mithin unmittelbar den statischen Umgebungsdruck der Luft im Zuströmraum A sowie unmittelbar den statischen Druck der Luft in dem Düsendruckraum B messen. Aus der Differenz des Umgebungsdrucks der Luft im Zuströmraum A und dem Druck der Luft im Düsendruckraum B berechnet die Regelelektronik den geförderten Volumenstrom an Luft. Der durch die Regelelektronik bestimmte Volumenstrom wird mittels eines Drahtes 2 an die in den Motor 10 integrierte Motorsteuerelektronik 10' übertragen. Die Motorsteuerelektronik 10' regelt die Drehzahl des Motors 10 und dadurch die Drehzahl des Ventilatorrades 11 in Abhängigkeit des durch das integrale Messmodul 1 ermittelten Volumenstroms und eines vorgegebenen Sollvolumenstroms. Insbesondere wird durch die Volumenstromregelung vorgesehen, dass der geförderte Volumenstrom konstant gehalten wird.

Anströmseitig umfasst der Ventilator an der Einströmdüse 12 zudem ein als Frontblech ausgebildetes Frontelement 13 mit einer zentralen Einströmöffnung. Das Frontblech dient als Anschlusselement für den Ventilator und beeinflusst in der gezeigten Ausführung die Strömung nicht. Alternativ kann das Messmodul 1 jedoch auch an dem Frontelement 13 befestigt werden, da auch hier unmittelbar die Werte der statischen Drücke des Zuströmraums A und Düsendruckraums B erfassbar sind. In einer weiteren Ausführung kann vorgesehen werden, dass das Frontelement 13 ein nicht dargestelltes Ventilatorgehäuse axial abschließt.

## Patentansprüche

1. Ventilator umfassend
einen Motor (10),
ein Ventilatorrad (11),
eine stromaufwärts zu dem Ventilatorrad angeordnete Einströmdüse (12),
zumindest eine Luftdruckmessvorrichtung mit zumindest einem Luftdrucksensor,
eine mit der Luftdruckmessvorrichtung verbundene Regelelektronik,
wobei die zumindest eine Luftdruckmessvorrichtung in unmittelbarer Wirkverbindung mit einem Zuströmraum (A) und einem von der Einströmdüse (12) bestimmten Düsendruckraum (B) steht, **dadurch gekennzeichnet, dass** die Luftdruckmessvorrichtung und die Regelelektronik mittelbar über ein Frontelement (13) stromaufwärts an der Einströmdüse (12) angeordnet sind, dass die Luftdruckmessvorrichtung und die Regelelektronik integral als ein Messmodul (1) ausgebildet sind,
dass
die Luftdruckmessvorrichtung ausgebildet ist, unmittelbar einen statischen Umgebungsdruck im Zuströmraum (A) und einen statischen Druck im Düsendruckraum (B) der Einströmdüse (12) zu messen, und
die Regelelektronik mit dem Motor (10) verbunden und ausgebildet ist, basierend auf den unmittelbar gemessenen Werten des Umgebungsdrucks im Zuströmraum (A) und des Drucks im Düsendruckraum (B) einen Regelwert an den Motor (10) zu liefern, über welchen eine Ventilatorraddrehzahl einstellbar ist,
dass
das Messmodul (1) unmittelbar an den Düsendruckraum (B) und den Zuströmraum (A) angrenzend angeordnet ist,
dass das Messmodul (1) als modulare Einheit von dem Ventilator lösbar und modular ersetzbar ist, und
dass das Frontelement (13) an den Zuströmraum (A) angrenzend und an einer stromaufwärtigen Seite der Einströmdüse (12) angeordnet ist und
ein Befestigungselement zur Befestigung des Ventilators bestimmt.

2. Ventilator nach einem der vorhergehenden Ansprüche, **dadurch gekennzeichnet, dass** die Luftdruckmessvorrichtung zwei Luftdrucksensoren umfasst, wobei ein erster Luftdrucksensor der zwei Luftdrucksensoren in unmittelbarer Wirkverbindung mit dem Düsendruckraum (B) und ein zweiter Luftdrucksensor der zwei Luftdrucksensoren in unmittelbarer Wirkverbindung mit dem Zuströmraum (A) sind.

3. Ventilator nach Anspruch 1, **dadurch gekennzeichnet, dass** die Luftdruckmessvorrichtung einen Differenzdrucksensor aufweist, der in unmittelbarer Wirkverbindung mit dem Düsendruckraum (B) und in unmittelbarer Wirkverbindung mit dem Zuströmraum (A) ist.

4. Ventilator nach einem der vorhergehenden Ansprüche, wobei
die Regelelektronik und der Motor (10) miteinander eine drahtgebundene oder eine drahtlose Verbindung (2) aufweisen.

5. Ventilator nach einem der vorhergehenden Ansprüche, wobei
das Frontelement (13) ein eine Einströmöffnung der Einströmdüse (12) überspannendes Gitter ist.

6. Verfahren zur Volumenstromregelung des Ventilators nach einem der vorigen Ansprüche, wobei
der statische Umgebungsdruck in dem Zuströmraum (A) und der statische Druck in dem Düsendruckraum (B) der Einströmdüse (12) unmittelbar von der Luftdruckmessvorrichtung gemessen werden und
die Regelelektronik aus dem statischen Umgebungsdruck des Zuströmraums (A) und dem statischen Druck des Düsendruckraums (B) zumindest einen Regelwert bestimmt und den Regelwert drahtlos oder drahtgebunden an den Motor (10) zur Steuerung der Ventilatorraddrehzahl übermittelt.

7. Verfahren zur Volumenstromregelung des Ventilators nach dem vorhergehenden Anspruch, wobei
der Motor (10) eine Motorsteuerelektronik (10') aufweist, die ausgebildet ist, ein Motorsteuerungssignal zur Volumenstromregelung des Ventilators aus mehreren Eingangswerten zu ermitteln, wobei einer der Eingangswerte der von der Regelelektronik bestimmte Regelwert ist.

8. Verfahren zur Volumenstromregelung des Ventilators nach einem der vorhergehenden Ansprüche 6-7, wobei
der statische Druck in dem Düsendruckraum (B) an zumindest zwei unterschiedlichen Messstellen erfasst und über eine Druckschlauchleitung an das Messmodul geführt wird.

## Claims

1. A fan, comprising
a motor (10),
a fan wheel (11),
an inlet nozzle (12) arranged upstream of the fan wheel,
at least one air pressure measuring device with at least one air pressure sensor,
control electronics connected to the air pressure measuring device, wherein
the at least one air pressure measuring device is in direct operative connection with an inflow area (A) and a nozzle pressure area (B) determined by the inflow nozzle (12),
**characterized in that** the air pressure measuring device and the control electronics are arranged indirectly via a front element (13) upstream of the inflow nozzle (12), **in that** the air pressure measuring device and the control electronics are designed integrally as a measuring module (1),
**in that** the air pressure measuring device is designed to directly measure a static ambient pressure in the inflow area (A) and a static pressure in the nozzle pressure area (B) of the inflow nozzle (12), and that
the control electronics is connected to the motor (10) and is designed to deliver a control value to the motor (10) on the basis of the directly measured values of the ambient pressure in the inflow area (A) and of the pressure in the nozzle pressure area (B), via which control value a fan wheel speed can be set,
**in that** the measuring module (1) is arranged directly adjacent to the nozzle pressure space (B) and the inflow area (A),
**in that** the measuring module (1) can be detached from the fan and modularly replaced as a modular unit, and
**in that** the front element (13) is arranged adjacent to the inflow area (A) and on an upstream side of the inflow nozzle (12) and
determines a fastening element for fastening the fan.

2. The fan according to any one of the preceding claims, **characterized in that** the air pressure measuring device comprises two air pressure sensors, wherein a first air pressure sensor of the two air pressure sensors is in direct operative connection with the nozzle pressure area (B) and a second air pressure sensor of the two air pressure sensors is in direct operative connection with the inflow area (A).

3. The fan according to claim 1, **characterized in that** the air pressure measuring device comprises a differential pressure sensor which is in direct operative connection with the nozzle pressure area (B) and in direct operative connection with the inflow area (A).

4. The fan according to any one of the preceding claims, wherein
the control electronics and the motor (10) have a wired or a wireless connection (2) to each other.

5. The fan according to any one of the preceding claims, wherein
the front element (13) is a grid spanning over an inflow opening of the inflow nozzle (12).

6. A method for volume flow control of the fan according to any one of the preceding claims, wherein
the static ambient pressure in the inflow area (A) and the static pressure in the nozzle pressure area (B) of the inflow nozzle (12) are measured directly by the air pressure measuring device and
the control electronics determines at least one control value from the static ambient pressure of the inflow area (A) and the static pressure of the nozzle pressure area (B) and transmits the control value wirelessly or by wire to the motor (10) for controlling the fan wheel speed.

7. The method for volume flow control of the fan according to the preceding claim, wherein
the motor (10) has motor control electronics (10') which is designed to determine a motor control signal for volume flow control of the fan from a plurality of input values, wherein one of the input values is the control value determined by the control electronics.

8. The method for volume flow control of the fan according to any of the preceding claims 6-7, wherein
the static pressure in the nozzle pressure area (B) is detected at at least two different measuring points and is fed to the measuring module via a pressure hose line.

## Revendications

1. Ventilateur, comprenant
un moteur (10),
une roue de ventilateur (11),
une buse d'admission (12) disposée en amont de la roue de ventilateur,
au moins un dispositif de mesure de pression d'air doté d'au moins un capteur de pression d'air,
une électronique de régulation reliée au dispositif de mesure de pression d'air,
ledit au moins un dispositif de mesure de pression d'air étant en relation active directe avec un espace d'afflux (A) et un espace de pression de buse (B) déterminée par la buse d'admission (12),
**caractérisé en ce que** le dispositif de mesure de pression d'air et l'électronique de régulation sont disposés indirectement en amont sur la buse d'admission (12) par l'intermédiaire d'un élément frontal (13), **en ce que** le dispositif de mesure de pression d'air et l'électronique de régulation sont réalisés d'un seul tenant sous la forme d un module de mesure (1),
**en ce que**
le dispositif de mesure de pression d'air est réalisé pour mesurer directement une pression ambiante statique dans l'espace d'afflux (A) et une pression statique dans l'espace de pression de buse (B) de la buse d'admission (12), et
l'électronique de régulation est reliée au moteur (10) et réalisée pour fournir une valeur de régulation au moteur (10), sur la base des valeurs mesurées directement de la pression ambiante dans l'espace d'afflux (A) et de la pression dans l'espace de pression de buse (B), ladite valeur permettant de régler une vitesse de rotation de roue de ventilateur,
**en ce que**
le module de mesure (1) est disposé de manière directement adjacente à l'espace de pression de buse (B) et à l'espace d'afflux (A),
**en ce que** le module de mesure (1) peut être utilisé comme une unité modulaire pouvant être détachée du ventilateur et remplacée par un module, et
**en ce que** l'élément frontal (13) est disposé de manière adjacente à l'espace d'afflux (A) et sur un côté amont de la buse d'admission (12) et détermine un élément de fixation pour fixer le ventilateur.

2. Ventilateur selon l'une quelconque des revendications précédentes, **caractérisé en ce que** le dispositif de mesure de pression d'air comprend deux capteurs de pression d'air, un premier capteur de pression d'air des deux capteurs de pression d'air étant en relation active directe avec l'espace de pression de buse (B), et un deuxième capteur de pression d'air des deux capteurs de pression d'air étant en relation active directe avec l'espace d'afflux (A).

3. Ventilateur selon la revendication 1, **caractérisé en ce que** le dispositif de mesure de pression d'air présente un capteur de pression différentielle qui est en relation active directe avec l'espace de pression de buse (B) et en relation active directe avec l'espace d'afflux (A).

4. Ventilateur selon l'une quelconque des revendications précédentes, dans lequel
l'électronique de régulation et le moteur (10) présente une connexion avec ou sans fil (2) l'une avec l'autre.

5. Ventilateur selon l'une quelconque des revendications précédentes, dans lequel
l'élément frontal (13) est une grille recouvrant une ouverture d'admission de la buse d'admission (12).

6. Procédé permettant de réguler le débit volumique du ventilateur selon l'une quelconque des revendications précédentes, dans lequel
la pression ambiante statique dans l'espace d'afflux (A) et la pression statique dans l'espace de pression de buse (B) de la buse d'admission (12) sont mesurées directement par le dispositif de mesure de pression d'air, et
l'électronique de régulation détermine à partir de la pression ambiante statique de l'espace d'afflux (A) et de la pression statique de l'espace de pression de buse (B) au moins une valeur de régulation et transmet la valeur de régulation avec ou sans fil au moteur (10) pour commander la vitesse de rotation de roue de ventilateur.

7. Procédé permettant de réguler le débit volumique du ventilateur selon la revendication précédente, dans lequel
le moteur (10) présente une électronique de commande de moteur (10') qui est réalisée pour établir à partir de plusieurs valeurs d'entrée un signal de commande de moteur permettant de réguler le débit volumique du ventilateur, l'une des valeurs d'entrée étant la valeur de régulation déterminée par l'électronique de régulation.

8. Procédé permettant de réguler le débit volumique du ventilateur selon l'une quelconque des revendications précédentes 6 à 7, dans lequel
la pression statique dans l'espace de pression de buse (B) est établie à au moins deux points de mesure différents et est amenée au module de mesure par une conduite en tuyau de pression.
